# EUROPÄISCHE PATENTSCHRIFT

(11) **EP 0 929 431 B1**
(45) Veröffentlichungstag und Bekanntmachung des Hinweises auf die Patenterteilung: **13.11.2002**
(21) Anmeldenummer: 97922971.3
(22) Anmeldetag: 06.05.1997
(51) Int. Cl.: B60T 17/22, B60T 8/88

(54) **VERFAHREN ZUR ERKENNUNG EINES DEFEKTS AN EINER DRUCKSCHALTERANORDNUNG UND DRUCKSCHALTERANORDNUNG**
METHOD FOR DETECTING A FAULT IN A PRESSURE-SWITCH ARRANGEMENT, AND PRESSURE-SWITCH ARRANGEMENT
PROCEDE DE RECONNAISSANCE D'UN DEFAUT DANS UN INTERRUPTEUR MANOMETRIQUE

(30) Priorität: 11.05.1996 DE 19619200
(43) Veröffentlichungstag der Anmeldung: 21.07.1999
(73) Patentinhaber: Continental Teves AG & Co. oHG, 60488 Frankfurt (DE)
(72) Erfinder: EHMER, Norbert, D-65760 Eschborn (DE); PRÖGER, Thomas, D-63322 Rödermark 1 (DE); ZENZEN, Markus, D-65795 Hattersheim 2 (DE)
(74) Vertreter: Blum, Klaus-Dieter
(86) Internationale Anmeldenummer: EP9702294
(87) Internationale Veröffentlichungsnummer: WO97043156

(56) Entgegenhaltungen:
- EP-A- 0 310 113
- WO-A-93/00238
- DE-A- 3 427 380
- DE-A- 3 833 473

## Beschreibung

Die vorliegende Erfindung geht aus von einem Verfahren zur Erkennung eines Defekts an einer Druckschalteranordnung gemäß dem Oberbegriff des Anspruchs 1 sowie von einer Druckschalteranordnung gemäß dem Oberbegriff des Anspruchs 5.

Derartige Druckschalter werden beispielsweise in Kraftfahrzeugen eingebaut, welche eine Vorderachs-Hinterachs-Bremskreisaufteilung aufweisen. Sie haben die Aufgabe, bei einem Bremskreisausfall an der Vorderachse sicherzustellen, daß eine Bremsdruckreduzierung an der Hinterachse zur Einstellung der idealen Bremskraftverteilung in einem solchen Falle nicht erfolgt. In der Regel ist es so, daß ein Druckschalter bei unbetätigter Bremse geschlossen ist und vom Bremsdruck geöffnet wird. Bleibt also der Druckschalter während einer Bremsung, beispielsweise bei betätigtem Bremslichtschalter, geschlossen, so heißt das, daß im Vorderachsbremskreis kein Druck aufgebaut wird. Der Bremskreis ist defekt. Damit die laut ECE-Richtlinie verlangte Fahrzeugverzögerung von 30 % bei einem Bremskreisausfall auch mit dem Hinterachsbremskreis allein erfüllt werden kann, wird in einem solchen Falle eines erkannten defekten Vorderachsbremskreises eine Bremskraftverteilung unterbunden. Dies ist möglich mittels eines mit elektrischen Mitteln sperrbaren Bremsdruckminderers der konventionellen Art oder durch Abschaltung einer Einrichtung zur elektronischen Bremskraftverteilung. Eine Bremsdruckregelung ist somit nur bei geöffnetem Druckschalter möglich, weil nur dann sichergestellt ist, daß in der Vorderachse ein Druckaufbau erfolgt. Sollte also beispielsweise der Druckschalter nur aufgrund eines Defektes geöffnet sein, so würde auch bei einem defekten vorderachsbremskreis eine Bremsdruckminderung an der Hinterachse stattfinden, so daß die nötige Fahrzeugverzögerung nicht erreicht werden könnte. Aber auch andere Defekte des Druckschalters sollten aus Sicherheitsgründen erkannt werden.

Einen Bremsdruckgeber für eine schlupfgeregelte Kraftfahrzeug-Bremsanlage mit einem Druckschalter beschreibt die DE-A-34 27 380. Hier übernimmt der Druckschalter die Funktion der Erkennung einer Druckdifferenz zwischen einem dynamischen Bremskreis und der Druckzuleitung zu einer Vorkammer. Der mit dem Druckschalter verbundene elektrische Schalter übermittelt an die Steuerelektronik der Bremsanlage lediglich die beiden Signalarten "An" oder "Aus". Eine Fehlererkennung des Druckschalters ist somit nicht durchführbar.

Die Aufgabe der vorliegenden Erfindung besteht darin, ein Verfahren der eingangs genannten Art sowie eine gattungsgemäße Druckschalteranordnung anzugeben, durch welche eine Fehlererkennung der Druckschalteranordnung ermöglicht wird.

Ein Verfahren, mit welchem die Aufgabe gelöst wird, ergibt sich in Verbindung mit den kennzeichnenden Merkmalen des Anspruchs 1. Eine Druckschalteranordnung, welche entsprechende überwachbare Signale abgibt, ergibt sich in Verbindung mit den kennzeichnenden Merkmalen des Anspruchs 5.

Der einfachste Fall einer Fehlererkennung ist also dann gegeben, wenn das von der Druckschalteranordnung an den Regler weitergegebene Signal weder dem einen, noch dem anderen Betriebszustand der Bremse entspricht.

Wenn zusätzlich noch eine Fahrzeugbeschleunigung erfaßt oder berechnet wird, so ergibt sich die weitere Möglichkeit, abhängig von der Beschleunigung die Plausibilität des aktuellen Druckschaltersignals zu überprüfen. Nicht plausibel ist beispielsweise die Anzeige einer Bremsbetätigung, obwohl das Fahrzeug signifikant beschleunigt. Als signifikante Beschleunigung kann eine Fahrzeugbeschleunigung von mindestens etwa 0,2 g betrachtet werden.

Auf der anderen Seite liegt auch ein nicht plausibles Signal vor, wenn der Druckschalter fehlenden Bremsdruck anzeigt, das Fahrzeug aber stark verzögert, insbesondere wenn zugleich aufgrund einer elektronischen Bremsdruckregelung oder eines Bremslichtschalters angezeigt wird, daß die Bremse betätigt ist. Starke Verzögerung ist hierbei eine solche Verzögerung, die mit dem Hinterachsbremskreis allein nicht erzielt werden kann, so daß davon auszugehen ist, daß im Vorderachsbremskreis entgegen dem Signal des Druckschalters ein Bremsdruck ansteht. Dies ist bei einer Verzögerung ab etwa 0,6 g der Fall.

Bei erkanntem Defekt des Druckschalters empfiehlt sich, eine optische Anzeige, insbesondere eine Warnlampe, zu aktivieren.

Es kann aber auch eine Notfunktion einer Bremsschlupfregelung oder einer anderen elektronischen Bremsdruckregelung einsetzen. Aber auch in einem solchen Falle sollte der Fahrer gewarnt werden, da bei einem tatsächlichen Ausfall des Vorderachsbremskreises keine weitere Detektion des Defektes erfolgt.

Die Druckschalteranordnung nach Anspruch 5 ist in der Lage, drei verschiedene Signale zu liefern, je nach Betriebszustand des Druckschalters. Ein gepulstes Signal zeigt einen anstehenden Druck an, ein konstanter High-Pegel einen drucklosen Bremskreis und ein konstanter Low-Pegel einen Massekurzschluß. Eine nähere Erläuterung der Erfindung erfolgt nun anhand der Beschreibung eines Ausführungsbeispiels in einer Figur.

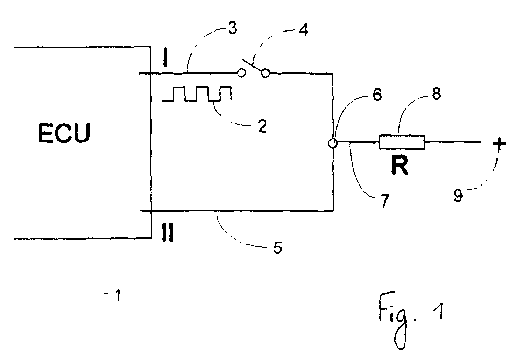

Die einzige Figur zeigt eine erfindungsgemäße Druckschalteranordnung.

Die mit ECU bezeichnete elektronische Recheneinheit 1 weist zwei Anschlüsse I und II zur Druckschalteranordnung auf. Der Anschluß I ist ein Ausgang, an welchem ein Rechtecksignal 2 generiert wird. In den an diesen Anschluß I angeschlossenen Leitungszweig 3 ist ein Druckschalter 4 eingefügt. Der Druckschalter 4 ist in seiner Grundstellung geschlossen und wird von anstehendem hydraulischen Druck geöffnet.

Der andere Anschluß II ist ein Eingang zur elektronischen Recheneinheit. Der an den Anschluß II angeschlossene Leitungszweig 5 verläuft zum Knotenpunkt 6, an den auch der Leitungszweig 3 anknüpft. An den Knotenpunkt 6 ist des weiteren eine Leitung 7 angeschlossen, in welche ein sogenannter "Pull-Up-Widerstand" 8 eingefügt ist, der mit R bezeichnet ist. Die Leitung 7 verbindet den Knotenpunkt 6 mit dem Pluspol 9 einer Konstantspannungsquelle, beispielsweise einer Fahrzeugbatterie.

Bei geschlossenem Druckschalter 4 kommt das Rechtecksignal 2 am Anschluß II an. Bei offenem Druckschalter 4 liegt aufgrund des Pull-Up-Widerstandes 8, der mit der Konstantspannungsquelle verbunden ist, ein High-Pegel am Anschluß II an.

Ist nun bei einem offenen Druckschalter ein Massekurzschluß in der Leitung 5 vorhanden, so kommt am Anschluß II ein Low-Pegel an, der wenn dieser Zustand für eine gewisse Zeit ansteht, auf einen defekten Druckschalter schließen läßt, da das Rechtecksignal 2 nur sehr kurzzeitige Low-Pegel aufweist. Bei einem geschlossenen Druckschalter würde am Anschluß II ebenfalls dann ein Low-Pegel ankommen, wenn irgendwo zwischen Anschluß I und Anschluß II ein Massekurzschluß vorhanden wäre. Auch in diesem Fall wird ein defekter Druckschalter erkannt. Liegt aber anstatt eines Massekurzschlusses ein Plus zwischen den Anschlüssen I und II an, beispielsweise aufgrund eines Defektes des Pull-Up-Widerstandes 8, so führt dies nicht zur Erkennung eines Fehlers der Druckschalteranordnung nach diesem Verfahren.

Daher sind weitere Plausibilitätsprüfungen vorgesehen.

Durchläuft das Fahrzeug über eine bestimmte Zeit eine Beschleunigung von mindestens 0,2 g, so wird geprüft, ob der Druckschalter offen ist, also ein High-Pegel am Anschluß II ankommt. Sollte dies der Fall sein, dann wird davon ausgegangen, daß der Druckschalter bzw. die Druckschalteranordnung defekt ist, weil ein offener Druckschalter auf eine betätigte Bremse hinweist.

Andererseits wird bei stetig geschlossenem Druckschalter, welcher ein Zeichen dafür ist, daß die Bremse nicht betätigt ist, die Fahrzeugverzögerung beobachtet. Wird in diesem Fall das Fahrzeug um mehr als 0,6 g verzögert und dauert dieser Zustand für eine bestimmte Zeit an, ohne daß der Druckschalter geöffnet wird, dann muß ebenfalls von einem defekten Druckschalter ausgegangen werden, da eine so große Fahrzeugverzögerung nur mit zwei funktionierenden Bremskreisen erzielt werden kann. Dies gilt inbesondere dann, wenn weitere Indizien für eine Bremsbetätigung vorliegen wie eingeschalteter Bremslichtschalter oder elektronische Bremsdruckregelung im Antiblockierbetrieb etc..

Diese Fehlererkennung der Druckschalteranordnung ist selbstverständlich auch übertragbar auf solche Druckschalter, die bei Bremsbetätigung geschlossen werden. In diesem Falle sind lediglich die Signale für betätigte und nicht betätigte Bremse vertauscht.

Bei allen drei Prüfungen der Druckschalteranordnung führt die Fehlererkennung dazu, daß eine Warnlampe aktiviert wird. Diese soll dem Fahrer anzeigen, daß beispielsweise die Funktion einer elektronischen Bremskraftverteilung eingeschränkt ist. Die elektronische Bremskraftverteilung muß deswegen auf eine unempfindlichere Regelung umgeschaltet werden, da im Falle eines zusätzlichen Ausfalls des Vorderachsbremskreises trotzdem die Normen erfüllt werden, in denen eine ausreichende Verzögerung allein mit dem Hinterachsbremskreis erzielt werden muß. Ein Antiblockiersystem kann unverändert weiterarbeiten.

## Patentansprüche

1. Verfahren zur Erkennung eines Defektes an einer Druckschalteranordnung, welche in einer druckmittelbetätigten Bremsanlage angeordnet ist und ein erstes Signal (2) an eine elektronische Recheneinheit (1) weitergibt, wenn kein Bremsdruck ansteht, und ein zweites, davon verschiedenes Signal (9), wenn ein Bremsdruck ansteht, **dadurch gekennzeichnet, daß** ein Defekt angenommen wird, wenn ein drittes Signal an die elektronische Recheneinheit weitergeben wird, das weder dem ersten noch dem zweiten Signal (2,9) entspricht.

2. Verfahren nach Anspruch 1, **dadurch gekennzeichnet, daß** ein Defekt auch dann angenommen wird, wenn das Signal (9) für anstehenden Bremsdruck für bestimmte Zeit weitergegeben wird, das Fahrzeug aber signifikant beschleunigt.

3. Verfahren nach einem der Ansprüche 1 und 2, **dadurch gekennzeichnet, daß** ein Defekt auch dann angenommen wird, wenn das Signal (2) für fehlenden Bremsdruck weitergegeben wird, das Fahrzeug aber eine so starke Verzögerung erfährt, daß diese nur mit zwei intakten Bremskreisen erzielt werden kann.

4. Verfahren nach einem der vorhergehenden Ansprüche, **dadurch gekennzeichnet, daß** bei Annahme eines Defektes eine optische Anzeige aktiviert wird.

5. Einrichtung zur Erkennung eines Defekts an einer Druckschalteranordnung, welche in einer druckmittelbetätigten Bremsanlage angeordnet ist und ein erstes Signal an eine elektronische Recheneinheit (1) weitergibt, wenn kein Bremsdruck ansteht und ein zweites, davon verschiedenes Signal (9), wenn ein Bremsdruck ansteht, **gekennzeichnet durch** eine Verbindungsleitung (5,3) zwischen einem Ausgang I und einem Eingang II einer elektronischen Recheneinheit, wobei eine gepulste Spannung (2) am Ausgang I angelegt ist, in der Verbindungsleitung (3) ein Druckschalter (4) angeordnet ist und zwischen Druckschalter (4) und Eingang (2) eine Verbindungsleitung (7) anknüpft, die über einen Pull-Up-Widerstand (8) mit einer Konstantspannungsquelle (9) verbunden ist.

## Claims

1. A process of detecting a defective condition on a pressure switch assembly arranged in a pressure fluid-actuated brake system and transmitting a first signal (2) to an electronic computing unit (1) if no brake pressure is applied, and a second signal (9) differing from the first signal if brake pressure is applied,
**characterized in that** a defective condition is assumed if a third signal is transmitted to the electronic computing unit that corresponds to neither the first nor the second signal (2,9).

2. The process according to claim 1,
**characterized in that** a defective condition is also assumed if the signal (9) indicative of the presence of brake pressure is transmitted for a predetermined period of time while the vehicle significantly accelerates.

3. The process according to any one of claims 1 and 2,
**characterized in that** a defective condition is also assumed if the signal (2) indicative of a lack of brake pressure is transmitted while the vehicle is so significantly decelerated that such a deceleration can be achieved only with two intact brake circuits.

4. The process according to any one of the preceding claims,
**characterized in that** an optical display is activated if a defective condition is assumed.

5. A device for detecting a defect at a pressure switch arrangement located in a pressure fluid-actuated brake system and transmitting a first signal to an electronic computing system (1) if no brake pressure is applied, and a second signal (9) differing therefrom if brake pressure is applied,
**characterized by** a connecting conduit (5,3) between an output I and an input II of an electronic computing unit, with a pulsed voltage (2) being applied to output I, a pressure switch (4) being provided in the connecting conduit (3) and a connecting conduit (7) being arranged between pressure switch (4) and input (2) and, by way of a pull-up resistor (8), being in communication with a constant voltage source (9).

## Revendications

1. Procédé de reconnaissance d'un défaut dans un dispositif à interrupteur manométrique qui est disposé dans un système de freinage actionné par un fluide sous pression et qui transmet un premier signal (2) à une unité électronique de calcul (1), lorsqu'aucune pression de freinage ne s'applique, et un deuxième signal (9), différent du premier, lorsque s'applique une pression de freinage, **caractérisé en ce qu'**on suppose un défaut lorsqu'un troisième signal est transmis à l'unité électronique de calcul qui ne correspond ni au premier ni au deuxième signal (2, 9).

2. Procédé selon la revendication 1, **caractérisé en ce qu'**on suppose aussi un défaut lorsque le signal (9) d'application d'une pression de freinage est transmis pendant un temps déterminé, alors que le véhicule accélère de manière significative.

3. Procédé selon l'une des revendications 1 et 2, **caractérisé en ce qu'**on suppose aussi un défaut lorsque le signal (2) d'une absence de pression de freinage est transmis, mais que le véhicule subit un ralentissement si fort que celui-ci ne peut être obtenu qu'avec deux circuits de freinage intacts.

4. Procédé selon l'une des revendications précédentes, **caractérisé en ce que** dans l'hypothèse d'un défaut, un affichage optique est activé.

5. Dispositif de reconnaissance d'un défaut dans un interrupteur manométrique qui est disposé dans un système de freinage actionné par un fluide sous pression et qui transmet un premier signal (2) à une unité électronique de calcul (1), lorsqu'aucune pression de freinage ne s'applique, et un deuxième signal (9), différent du premier, lorsque s'applique une pression de freinage, **caractérisé par** une ligne de liaison (5,3) entre une sortie (I) et une entrée (II) d'une unité électronique de calcul, une tension pulsée (2) étant appliquée à la sortie (I), un interrupteur manométrique (4) étant disposé dans la ligne de liaison (3), et entre l'interrupteur manométrique (4) et l'entrée (2) s'établit une ligne de liaison (7) qui est reliée, par une résistance pull-up (8), à une source de tension constante (9).
